# EUROPÄISCHE PATENTANMELDUNG

(11) **EP 4 670 885 A1**
(43) Veröffentlichungstag der Anmeldung: **31.12.2025**
(21) Anmeldenummer: 25185423.8
(22) Anmeldetag: 26.06.2025
(51) Int. Cl.: B23D 47/02, B23D 47/04, B27B 5/06, B25H 1/02, B25H 1/10, B27C 5/06, B27B 5/065, B27B 31/00

(54) **PLATTENSÄGE ZUM TRENNEN VON WERKSTÜCKEN IN MEHRERE ABSCHNITTE**

(30) Priorität: 26.06.2024 AT 505292024
(71) Anmelder: GEA GmbH, 6866 Andelsbuch (AT)
(72) Erfinder: BISCHOFBERGER, Christian, 6866 Andelsbuch (AT); SUTTERLÜTY, Andreas, 6863 Egg (AT)
(74) Vertreter: Burger, Hannes Alfred

(57) **Zusammenfassung**

Die Erfindung betrifft eine Plattensäge (1) zum Trennen von Werkstücken (2) in mehrere Abschnitte, umfassend:
- ein Maschinengrundgestell (3);
- eine Werkstückauflage (4) mit einem Sägeschlitz (5);
- ein Sägeaggregat (7);
- eine Aufgabevorrichtung (11) zum Zuführen oder Abnehmen der Werkstücke (2), wobei die Aufgabevorrichtung (11) einen Aufgabetisch (12) mit einer Tischoberfläche (13) zur Auflage der Werkstücke (2) umfasst;
- eine Positioniervorrichtung (9) zum Positionieren der Werkstücke (2);
- eine Maschinensteuerung (18) zur Steuerung der Plattensäge (1),

Die Aufgabevorrichtung (11) umfasst eine erste Hubvorrichtung (26) mit einer ersten Hubvorrichtungsoberfläche (27), welche an einer ersten Seite (24) des Aufgabetisches (12) angeordnet ist und eine zweite Hubvorrichtung (45) mit einer zweiten Hubvorrichtungsoberfläche (46), welche an einer zweiten Seite (25) des Aufgabetisches (12) angeordnet ist, wobei die erste Hubvorrichtungsoberfläche (27) und die zweite Hubvorrichtungsoberfläche (46) relativ zur Tischoberfläche (13) in vertikaler Richtung verschiebbar ist.

## Beschreibung

Die Erfindung betrifft eine Plattensäge zum Trennen von Werkstücken in mehrere Abschnitte, sowie ein Verfahren zum Betreiben der Plattensäge.

Aus der WO2010133604A1 ist eine Plattensäge bekannt.

Die Plattensäge der WO2010133604A1 weist den Nachteil auf, dass schwere Werkstücke nicht mittels eines Gabelstaplers abgelegt bzw. entnommen werden können. Außerdem weist die Plattensäge der WO2010133604A1 eine nur unzureichende Maschinensicherheit auf.

Aufgabe der vorliegenden Erfindung war es, die Nachteile des Standes der Technik zu überwinden und eine Plattensäge zum Trennen von Werkstücken in mehrere Abschnitte, sowie ein Verfahren zum Betreiben der Plattensäge zur Verfügung zu stellen, bei welcher die Werkstücke einfach abgelegt bzw. entnommen werden können und darüber hinaus eine hohe Personensicherheit erreicht werden kann.

Diese Aufgabe wird durch eine Vorrichtung und ein Verfahren gemäß den Ansprüchen gelöst.

Erfindungsgemäß ist eine Plattensäge zum Trennen von Werkstücken in mehrere Abschnitte ausgebildet. Die Plattensäge umfasst:
- ein Maschinengrundgestell;
- eine Werkstückauflage mit einem Sägeschlitz;
- ein Sägeaggregat welches unterhalb der Werkstückauflage angeordnet ist, wobei am Sägeaggregat ein Kreissägeblatt angeordnet ist, welches in einer Sägestellung durch den Sägeschlitz hindurchragt;
- eine Aufgabevorrichtung zum Zuführen oder Abnehmen der Werkstücke, wobei die Aufgabevorrichtung einen Aufgabetisch mit einer Tischoberfläche zur Auflage der Werkstücke umfasst;
- eine Positioniervorrichtung zum Positionieren der Werkstücke;
- eine Maschinensteuerung zur Steuerung der Plattensäge.

Die Aufgabevorrichtung umfasst eine erste Hubvorrichtung mit einer ersten Hubvorrichtungsoberfläche, welche an einer ersten Seite des Aufgabetisches angeordnet ist und eine zweite Hubvorrichtung mit einer zweiten Hubvorrichtungsoberfläche, welche an einer zweiten Seite des Aufgabetisches angeordnet ist, wobei die erste Hubvorrichtungsoberfläche und die zweite Hubvorrichtungsoberfläche relativ zur Tischoberfläche in vertikaler Richtung verschiebbar ist.

Die erfindungsgemäße Plattensäge weist den Vorteil auf, dass mittels der ersten Hubvorrichtung bzw. der zweiten Hubvorrichtung Werkstücke mittels eines Gabelstaplers oder einer sonstigen Transportvorrichtung auf die Aufgabevorrichtung aufgegeben werden können bzw. von der Aufgabevorrichtung abgenommen werden können. Die Gabeln des Gabelstaplers bzw. der sonstigen Transportvorrichtung können hierbei zwischen der ersten Hubvorrichtung und der zweiten Hubvorrichtung oder auch außerhalb der ersten Hubvorrichtung und der zweiten Hubvorrichtung oder auch eine Gabel zwischen der ersten Hubvorrichtung und der zweiten Hubvorrichtung und eine Gabel außerhalb der ersten Hubvorrichtung und der zweiten Hubvorrichtung unter das Werkstück eingeführt werden bzw. aus diesem herausgezogen werden. Durch anschließendes Absenken der ersten Hubvorrichtung bzw. der zweiten Hubvorrichtung können die Werkstücke auf den Aufgabetisch abgelegt werden. Durch Anheben der ersten Hubvorrichtung bzw. der zweiten Hubvorrichtung können die Werkstücke vom Aufgabetisch angehoben werden.

Weiters kann es zweckmäßig sein, wenn die erste Hubvorrichtung eine stehend angeordnete erste Platte umfasst, wobei die erste Platte eine erste Plattenstärke in einer Förderrichtung aufweist und eine erste Plattenbreite in einer Querrichtung bezüglich der Förderrichtung aufweist und die zweite Hubvorrichtung eine stehend angeordnete zweite Platte umfasst, wobei die zweite Platte eine zweite Plattenstärke in Förderrichtung aufweist und eine zweite Plattenbreite in der Querrichtung aufweist, wobei die erste Platte und die zweite Platte parallel zueinander ausgerichtet sind. Besonders mittels der erfindungsgemäßen Platten lässt sich die Hubvorrichtung einfach umsetzen. Darüber hinaus kann durch diese Maßnahme eine erhöhte Sicherheit der Plattensäge erreicht werden, da die erste Platte und die zweite Platte derart im Bereich der Aufgabevorrichtung angeordnet werden können, dass keine Teile vorhanden sind, an welchen eine Quetschgefahr besteht.

Alternativ zur parallelen Anordnung der ersten Platte und der zweiten Platte können diese auch in einem Winkel zueinander angeordnet sein.

Ferner kann vorgesehen sein, dass an einer ersten Oberkante der ersten Platte ein erster Kantenschoner aus einem Kunststoffmaterial angeordnet ist und dass an einer zweiten Oberkante der zweite Platte ein zweiter Kantenschoner aus einem Kunststoffmaterial angeordnet ist.

Dies bringt den Vorteil mit sich, dass der Kantenschoner aus einem Kunststoffmaterial die Werkstücke beim Auflegen möglichst wenig beschädigt. Darüber hinaus kann durch diese Maßnahme erreicht werden, dass bei einem Verschleiß des Kantenschoners oder bei einer Beschädigung des Kantenschoners durch eine Staplergabel, der Kantenschoner ausgetauscht werden kann. Insbesondere kann vorgesehen sein, dass die erste Platte und die zweite Platte aus einem Stahlmaterial gebildet sind. Die Kantenschoner können mittels eines Befestigungsmittels, insbesondere mittels Befestigungsschrauben mit den Platten gekoppelt sein. Insbesondere kann vorgesehen sein, dass die Kantenschoner lösbar an den Platten aufgenommen sind.

In einer alternativen Ausführungsvariante kann auch vorgesehen sein, dass die Kantenschoner mittels einer stoffschlüssigen Verbindung, wie etwa einer Klebeverbindung an den Platten aufgenommen sind.

Darüber hinaus kann vorgesehen sein, dass die erste Platte mittels einer ersten Linearführung mit dem Aufgabetisch gekoppelt ist und die zweite Platte mittels einer zweiten Linearführung mit dem Aufgabetisch gekoppelt ist. Dies bringt den Vorteil mit sich, dass durch diese Maßnahme eine präzise und robuste Führung der ersten Platte bzw. der zweiten Platte erreicht werden kann. Insbesondere kann vorgesehen sein, dass am Aufgabetisch eine erste Führungsschiene und eine zweite Führungsschiene angeordnet sind und dass an der ersten Platte zumindest ein erster Führungsschlitten und ein zweiter Führungsschlitten angeordnet ist, wobei der erste Führungsschlitten in der ersten Führungsschiene geführt ist und der zweite Führungsschlitten in der zweiten Führungsschiene geführt ist. Weiters kann vorgesehen sein, dass am Aufgabetisch eine dritte Führungsschiene und eine vierte Führungsschiene angeordnet sind, wobei an der zweiten Platte ein dritter Führungsschlitten und ein vierter Führungsschlitten ausgebildet sind, wobei der dritte Führungsschlitten in der dritten Führungsschiene geführt ist und der vierte Führungsschlitten in der vierten Führungsschiene geführt ist.

Vorteilhaft ist auch eine Ausprägung, gemäß welcher vorgesehen sein kann, dass die erste Platte mit einem ersten Hubzylinder und einem zweiten Hubzylinder gekoppelt ist und dass die zweite Platte mit einem dritten Hubzylinder und einem vierten Hubzylinder gekoppelt ist, insbesondere dass die Hubzylinder als Pneumatikzylinder ausgebildet sind. Dies bringt den Vorteil mit sich, dass durch diese Maßnahme eine einfache Positionierung der ersten Platte und der zweiten Platte erreicht werden kann. Insbesondere durch die Verwendung von Pneumatikzylinder kann ein Arbeitsmedium verwendet werden, welches in ausreichender Menge zur Verfügung steht und darüber hinaus eine ausreichende Hubkraft erreicht werden kann.

In einer alternativen Ausführungsvariante kann auch vorgesehen sein, dass die erste Platte ausschließlich mit einem zentral angeordneten ersten Hubzylinder gekoppelt ist und dass die zweite Platte ausschließlich mit einem zentral angeordneten zweiten Hubzylinder gekoppelt ist.

Alternativ zur Verwendung von Pneumatikzylinder als Hubzylinder ist auch die Verwendung von Hydraulikzylindern oder weiteren Aktuatoren, wie etwa elektrische Linearaktuatoren, denkbar.

Gemäß einer Weiterbildung ist es möglich, dass die erste Platte und die zweite Platte mittels einer Koppelvorrichtung in deren vertikaler Position miteinander gekoppelt sind. Dies bringt den Vorteil mit sich, dass durch diese Maßnahme erreicht werden kann, dass während des Hebens bzw. während des Absenkens des Werkstückes eine Verkippung des Werkstückes möglichst unterbunden werden kann.

Ferner kann es zweckmäßig sein, wenn die Koppelvorrichtung ein erstes Ritzel umfasst, welches mit einer an der ersten Platte angeordneten ersten Zahnstange in Eingriff steht und ein zweites Ritzel umfasst, welches mit einer an der zweiten Platte angeordneten zweiten Zahnstange in Eingriff steht, wobei das erste Ritzel und das zweite Ritzel mittels einer Verbindungswelle miteinander gekoppelt sind. Besonders durch diese Maßnahme kann eine einfache Kopplung der vertikalen Position der ersten Platte und der zweiten Platte erreicht werden.

Darüber hinaus kann vorgesehen sein, dass die Tischoberfläche an einer wechselbaren Auflageplatte aus einem gehärteten Stahlblech angeordnet ist. Dies bringt den Vorteil mit sich, dass durch diese Maßnahme eine beispielsweise durch die Staplergabel beschädigte Tischoberfläche des Aufgabetisches einfach ausgetauscht werden kann. Insbesondere kann vorgesehen sein, dass die wechselbare Auflageplatte aus einem Hardox oder aus einem Toolox Material gebildet ist. Bei diesen beiden bekannten Materialbegriffen handelt es sich um gehärtete Stähle.

Weiters kann es zweckmäßig sein, dass die Aufgabevorrichtung einen zweiten Aufgabetisch umfasst, welcher relativ zum Aufgabetisch in einer Querrichtung verschiebbar ist. Dies bringt den Vorteil mit sich, dass durch den zweiten Aufgabetisch die Aufgabefläche verbreitert bzw. verschmälert werden kann. Insbesondere kann vorgesehen sein, dass der zweite Aufgabetisch entweder komplett an den Aufgabetisch bzw. eine Aufgabetischverlängerung herangeschoben werden kann oder dass der zweite Aufgabetisch in der Querrichtung in einem Abstand zum Aufgabetisch bzw. eine Aufgabetischverlängerung angeordnet werden kann. Durch diese Maßnahme kann die Plattensäge auf unterschiedliche Werkstückdimensionen angepasst werden.

Weiters kann vorgesehen sein, dass ein Kontaktsensor ausgebildet ist, mittels welchem erfasst werden kann, ob der zweite Auflagetisch an den Auflagetisch bzw. eine Aufgabetischverlängerung herangeschoben ist oder ob der zweite Auflagetisch vom Auflagetisch bzw. einer Aufgabetischverlängerung beabstandet ist.

Die Erfindung betrifft außerdem ein Verfahren zum Betreiben einer Plattensäge zum Trennen von Werkstücken in mehrere Abschnitte. Das Verfahren umfasst die Verfahrensschritte:
- Aufnahme von Werkstücken auf der ersten Hubvorrichtungsoberfläche und der zweiten Hubvorrichtungsoberfläche, wobei sich sie erste Hubvorrichtung und die zweite Hubvorrichtung in einer angehobenen Stellung befinden, in welcher ein Niveau der ersten Hubvorrichtungsoberfläche und der zweiten Hubvorrichtungsoberfläche oberhalb eines Niveau der Tischoberfläche liegt;
- Absenken der ersten Hubvorrichtungsoberfläche und der zweiten Hubvorrichtungsoberfläche in eine abgesenkte Stellung in der ein Niveau der ersten Hubvorrichtungsoberfläche und der zweiten Hubvorrichtungsoberfläche unterhalb eines Niveau der Tischoberfläche liegt;
- Verschieben des auf der Tischoberfläche aufliegenden Werkstückes in Förderrichtung zum Sägeaggregat.

Das erfindungsgemäße Verfahren bringt den Vorteil mit sich, dass mittels der ersten Hubvorrichtung bzw. der zweiten Hubvorrichtung Werkstücke mittels eines Gabelstaplers oder einer sonstigen Transportvorrichtung auf die Aufgabevorrichtung aufgegeben werden können bzw. von der Aufgabevorrichtung abgenommen werden können. Die Gabeln des Gabelstaplers bzw. der sonstigen Transportvorrichtung, wie etwa Gurte, können hierbei zwischen der ersten Hubvorrichtung und der zweiten Hubvorrichtung oder auch außerhalb der ersten Hubvorrichtung und der zweiten Hubvorrichtung oder auch eine Gabel zwischen der ersten Hubvorrichtung und der zweiten Hubvorrichtung und eine Gabel außerhalb der ersten Hubvorrichtung und der zweiten Hubvorrichtung unter das Werkstück eingeführt werden bzw. aus diesem herausgezogen werden. Durch anschließendes Absenken der ersten Hubvorrichtung bzw. der zweiten Hubvorrichtung können die Werkstücke auf den Aufgabetisch abgelegt werden.

Zusätzlich zum Verschieben des auf der Tischoberfläche aufliegenden Werkstückes in Förderrichtung zum Sägeaggregat kann auch vorgesehen sein, dass das Werkstück verdreht wird.

Zum Abnehmen der Werkstücke kann das Verfahren in umgekehrter Reihenfolge erfolgen: - Verschieben des auf der Tischoberfläche aufliegenden Werkstückes in Förderrichtung vom Sägeaggregat zur ersten Hubvorrichtung und zweiten Hubvorrichtung;
- Positionieren des Werkstückes über der ersten Hubvorrichtungsoberfläche und der zweiten Hubvorrichtungsoberfläche, wobei sich die erste Hubvorrichtung und die zweite Hubvorrichtung in einer abgesenkten Stellung befinden, in welcher ein Niveau der ersten Hubvorrichtungsoberfläche und der zweiten Hubvorrichtungsoberfläche unterhalb eines Niveau der Tischoberfläche liegt;
- Anheben der ersten Hubvorrichtungsoberfläche und der zweiten Hubvorrichtungsoberfläche in eine angehobene Stellung in der ein Niveau der ersten Hubvorrichtungsoberfläche und der zweiten Hubvorrichtungsoberfläche oberhalb eines Niveau der Tischoberfläche liegt
- Abnehmen des Werkstückes von der ersten Hubvorrichtungsoberfläche und der zweiten Hubvorrichtungsoberfläche mittels einer Transportvorrichtung.

Darüber hinaus kann vorgesehen sein, dass die Maschinensteuerung so programmiert ist, dass die Positioniervorrichtung nicht in Förderrichtung zur Aufgabevorrichtung hin verschoben werden kann, wenn sich die erste Hubvorrichtung und die zweite Hubvorrichtung in einer angehobenen Stellung befinden. Dies bringt den Vorteil mit sich, dass durch diese Maßnahme verhindert werden kann, dass sich eine Person zwischen einem mittels der Positioniervorrichtung bewegten Werkstück und der Hubvorrichtung klemmen kann.

Vorteilhaft ist auch eine Ausprägung, gemäß welcher vorgesehen sein kann, dass die erste Hubvorrichtung einen ersten Sensor umfasst, wobei der erste Sensor erfasst, ob ein Niveau der ersten Hubvorrichtungsoberfläche unterhalb eines Niveaus der Tischoberfläche liegt und die Freigabe einer Verschiebung der Positioniervorrichtung in Förderrichtung zur Aufgabevorrichtung nur bei entsprechender Erfassung des ersten Sensors vorliegt. Dies bringt den Vorteil mit sich, dass durch diese Maßnahme verhindert werden kann, dass sich eine Person zwischen einem mittels der Positioniervorrichtung bewegten Werkstück und der Hubvorrichtung klemmen kann.

Gemäß einer Weiterbildung ist es möglich, dass die Aufgabevorrichtung einen zweiten Aufgabetisch umfasst, welcher relativ zum Aufgabetisch in einer Querrichtung verschiebbar ist, wobei ein Kontaktsensor ausgebildet ist, mittels welchem ein Anliegen des zweiten Aufgabetisches am Aufgabetisch oder an einer Aufgabetischverlängerung detektiert werden kann, wobei eine Freigabe einer Verschiebung der ersten Hubvorrichtungsoberfläche von einer abgesenkten Stellung in eine angehobene Stellung nur bei entsprechender Erfassung des Kontaktsensors vorliegt. Dies bringt den Vorteil mit sich, dass durch diese Maßnahme verhindert werden kann, dass sich beim Anheben der Hubvorrichtung eine Person zwischen dem Aufgabetisch und dem zweiten Aufgabetisch befindet, welche durch einen einfahrenden Gabelstapler eingesperrt werden könnte. Somit kann durch diese Maßnahme die Sicherheit der Plattensäge verbessert werden.

Ferner kann es zweckmäßig sein, dass die erste Hubvorrichtung eine erste Platte umfasst, welche mit einem ersten Hubzylinder und einem zweiten Hubzylinder gekoppelt ist und dass die zweite Hubvorrichtung eine zweite Platte umfasst, welche mit einem dritten Hubzylinder und einem vierten Hubzylinder gekoppelt ist, wobei eine Verfahrgeschwindigkeit der Hubzylinder mittels einer Drossel eingestellt wird. Dies bringt den Vorteil mit sich, dass durch diese Maßnahme eine Verfahrgeschwindigkeit der Hubzylinder angepasst werden kann.

Darüber hinaus kann vorgesehen sein, dass ein Sicherheitsbereich definiert ist, wobei mittels eines optischen Erfassungsmittels erfasst wird, ob sich jemand im Sicherheitsbereich befindet und dass
- eine Freigabe einer Verschiebung der Positioniervorrichtung in Förderrichtung zur Aufgabevorrichtung oder
- eine Freigabe einer Verschiebung der ersten Hubvorrichtungsoberfläche von einer abgesenkten Stellung in eine angehobenen Stellung
nur dann erfolgt, wenn sich niemand im Sicherheitsbereich befindet. Dies bringt den Vorteil mit sich, dass durch diese Maßnahme die Sicherheit der Plattensäge weiter verbessert werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Ausführungsbeispiels einer Plattensäge;
- Fig. 2: eine perspektivische Ansicht von einer ersten Seite eines ersten Ausführungsbeispiels eines Aufgabetisches;
- Fig. 3: eine perspektivische Ansicht von einer zweiten Seite des ersten Ausführungsbeispiels des Aufgabetisches;
- Fig. 4: eine perspektivische Ansicht von einer ersten Seite eines zweiten Ausführungsbeispiels des Aufgabetisches.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

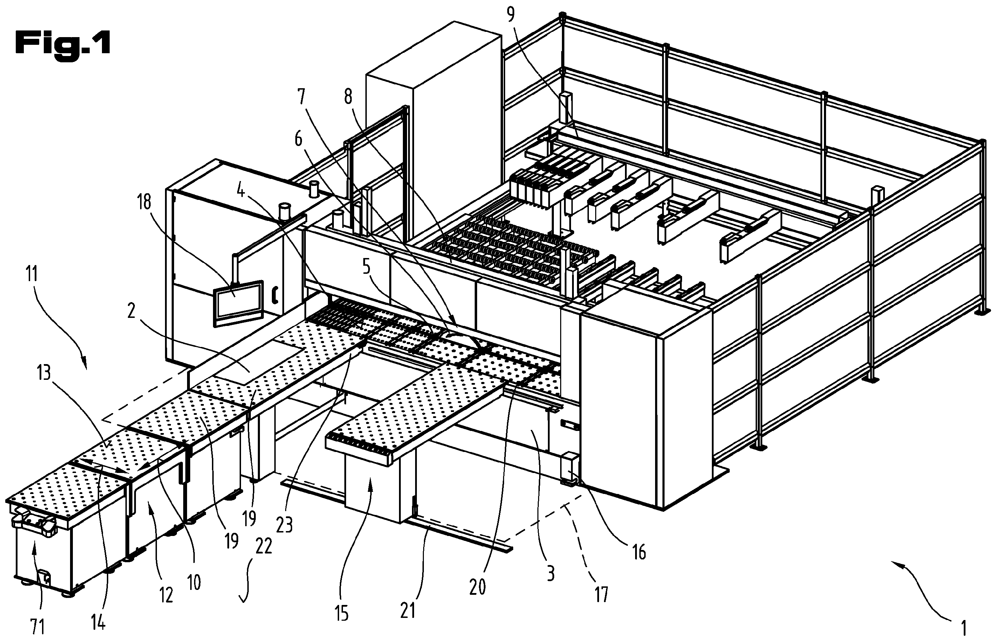

Fig.1 zeigt eine perspektivische Darstellung eines ersten Ausführungsbeispiels einer Plattensäge 1 zum Trennen von plattenförmigen Werkstücken 2. Mittels der Plattensäge 1 können die plattenförmigen Werkstücke 2 in mehrere Abschnitte geteilt werden bzw. können sie auf eine vorbestimmte Größe geschnitten werden.

Die Plattensäge 1 umfasst ein Maschinengrundgestell 3 auf welchem die einzelnen Bauteile aufgebaut sind.

Weiters ist eine Werkstückauflage 4 ausgebildet, auf welche das Werkstück 2 aufgelegt werden kann. Im Bereich der Werkstückauflage 4 ist ein Sägeschlitz 5 vorgesehen, durch welchen ein Kreissägeblatt 6 eines Sägeaggregates 7 hindurchragen kann, um das Werkstück 2 zu schneiden. Das Kreissägeblatt 6 kann in einer Sägerichtung verschiebbar am Maschinengrundgestell 3 aufgenommen sein. Somit können auch großformatige Werkstücke 2 mittels der Plattensäge 1 geschnitten werden.

Weiters kann eine Niederhaltevorrichtung 8 vorgesehen sein, welche zum Klemmen des Werkstückes 2 an der Werkstückauflage 4 dient. Mittels der Niederhaltevorrichtung 8 kann das Werkstück 2 zum Schneiden geklemmt werden, um eine saubere positionsgenaue Schnittführung zu erreichen.

Weiters kann die Plattensäge 1 eine Positioniervorrichtung 9 umfassen, welche zum Positionieren der Werkstücke 2 in einer Förderrichtung 10 dient. Insbesondere kann vorgesehen sein, dass die Werkstücke 2 mittels der Positioniervorrichtung 9 gegriffen bzw. geklemmt werden können und in der Förderrichtung 10 verschoben werden können.

Weiters kann vorgesehen sein, dass eine Aufgabevorrichtung 11 ausgebildet ist. Die Aufgabevorrichtung 11 kann zum Einlegen von Werkstücken 2 in die Plattensäge 1 bzw. zum Entfernen von Werkstücken 2 aus der Plattensäge 1 dienen. Insbesondere kann vorgesehen sein, dass die Werkstücke 2 mittels einer Flurfördervorrichtung, wie etwa einem Gabelstapler auf die Aufgabevorrichtung 11 aufgelegt werden bzw. von dieser entnommen werden. Die Werkstücke 2 können hierbei beim Aufgeben unzerschnittene Platten sein bzw. können die Werkstücke 2 beim Entnehmen bereits durch die Plattensäge 1 bearbeitete bzw. zerschnittene Platten sein.

Weiters kann vorgesehen sein, dass die Aufgabevorrichtung 11 einen Aufgabetisch 12 umfasst. Der Aufgabetisch 12 kann eine Tischoberfläche 13 aufweisen. Die Tischoberfläche 13 kann sich in der Förderrichtung 10 und quer dazu in eine Querrichtung 14 erstrecken. Weiters kann vorgesehen sein, dass die Aufgabevorrichtung 11 einen zweiten Aufgabetisch 15 umfasst. Der zweite Aufgabetisch 15 kann in der Querrichtung 14 neben dem Aufgabetisch 12 angeordnet sein.

Weiters kann vorgesehen sein, dass ein optisches Erfassungsmittel 16 ausgebildet ist. Das optische Erfassungsmittel 16 kann dazu dienen, um in einem Sicherheitsbereich 17 zu erfassen, ob sich eine Person darin aufhält. Insbesondere kann vorgesehen sein, dass das optische Erfassungsmittel 16 mit einer Maschinensteuerung 18 gekoppelt ist.

Weiters kann vorgesehen sein, dass zwischen dem Aufgabetisch 12 und der Werkstückauflage 4 der Plattensäge 1 eine oder mehrere Aufgabetischverlängerungen 19 vorgesehen sind. Weiters kann vorgesehen sein, dass der zweite Aufgabetisch 15 mittels einer ersten Führungsanbindung 20 mit dem Maschinengrundgestell 3 gekoppelt ist.

Weiters kann vorgesehen sein, dass der zweite Aufgabetisch 15 mittels einer zweiten Führungsanbindung 21 mit einem Aufstellungsuntergrund 22 gekoppelt ist. Mittels der ersten Führungsanbindung 20 bzw. zweiten Führungsanbindung 21 kann der zweite Aufgabetisch 15 in der Querrichtung 14 relativ zum Maschinengrundgestell 3 verschiebbar sein.

In der Darstellung nach Fig. 1 ist der zweite Aufgabetisch 15 in einem Abstand zum Aufgabetisch 12 bzw. zur Aufgabetischverlängerung 19 angeordnet. In einer weiteren, nicht dargestellten Stellung ist es auch denkbar, dass der zweite Aufgabetisch 15 an den Aufgabetisch 12 bzw. an die Aufgabetischverlängerung 19 herangeschoben wird, sodass der zweite Aufgabetisch 15 den zweiten Aufgabetisch 12 bzw. die Aufgabetischverlängerung 19 berührt bzw. in geringem Abstand zu diesem angeordnet ist.

Insbesondere kann vorgesehen sein, dass die Plattensäge 1 einen Kontaktsensor 23 umfasst mittels welchem diese berührende bzw. angenäherte Stellung des zweiten Aufgabetisches 15 erfasst werden kann. Der Kontaktsensor 23 kann mit der Maschinensteuerung 18 gekoppelt sein und eine entsprechende Information an die Maschinensteuerung 18 übermitteln, wenn der zweite Aufgabetisch 15 an den Aufgabetisch 12 bzw. an die Aufgabetischverlängerung 19 herangeschoben ist.

In der Fig. 1 ist darüber hinaus ein Zweihand-Bedienpult 71 ersichtlich. Das Zweihand-Bedienpult 71 kann zur Bedienung des Aufgabetisches 12 dienen. Durch die erforderliche Zweihandbedienung des Zweihand-Bedienpultes 71 kann der Bediener vor Gefährdungen durch Einklemmen seiner Hände geschützt werden. Insbesondere kann vorgesehen sein, dass für das Anheben bzw. das Absenken mittels eines Wahlschalters am Zweihand-Bedienpult 71 die Bewegungsrichtung festgelegt werden muss.

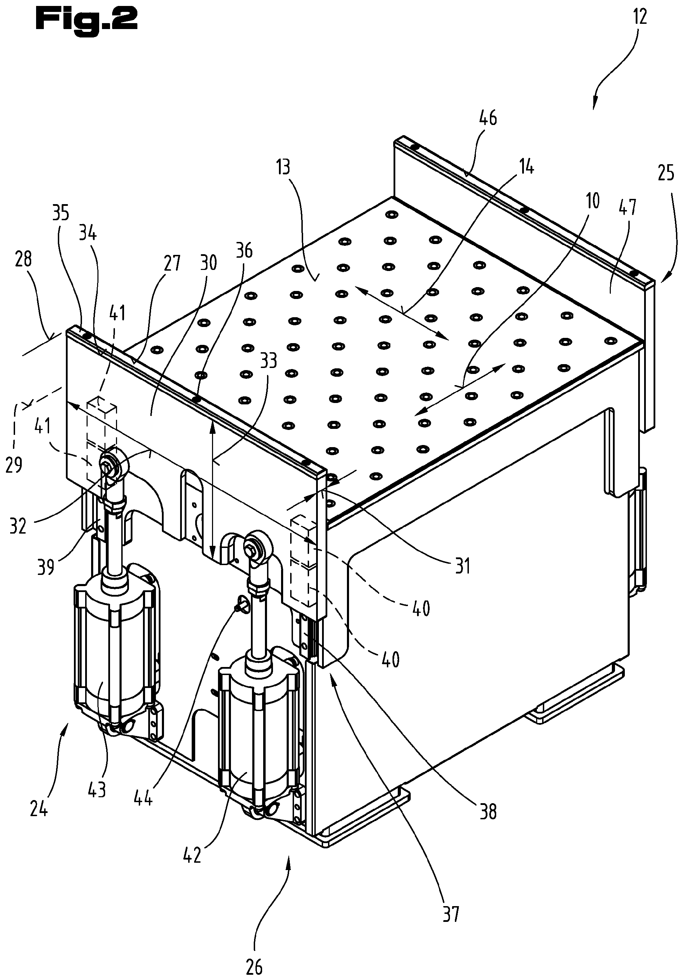

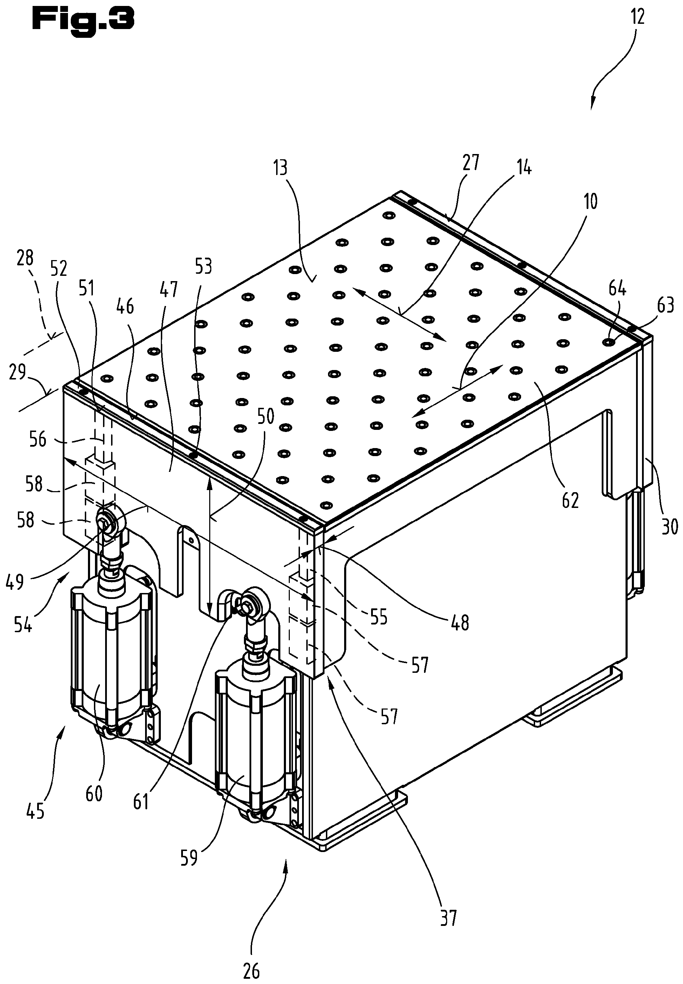

In den Fig. 2 und 3 ist ein erstes Ausführungsbeispiel des Aufgabetisches 12 dargestellt.

In der Darstellung nach Fig. 2 befindet sich der Aufgabetisch 12 in einer ersten Stellung und in der Darstellung nach Fig. 3 befindet sich der Aufgabetisch 12 in einer zweiten Stellung. Außerdem ist in der Darstellung nach Fig. 2 der Aufgabetisch 12 in einer ersten perspektivischen Ansicht dargestellt, sodass eine erste Seite 24 des Aufgabetisches 12 dem Betrachter zugewandt ist. In der Fig. 3 ist der Aufgabetische 12 in einer zweiten perspektivischen Ansicht dargestellt, sodass eine zweite Seite 25 des Aufgabetisches 12 dem Betrachter zugewandt ist.

Wie aus Fig. 2 ersichtlich, kann vorgesehen sein, dass an der ersten Seite 24 des Aufgabetisches 12 eine erste Hubvorrichtung 26 angeordnet ist. Die erste Hubvorrichtung 26 kann eine erste Hubvorrichtungsoberfläche 27 aufweisen, welche zur Aufnahme des Werkstücks 2 dient. Die erste Hubvorrichtungsoberfläche 27 kann relativ zur Tischoberfläche 13 zwischen einer angehobenen Stellung 28 und einer abgesenkten Stellung 29 verschiebbar sein.

In der angehobenen Stellung 28 kann die erste Hubvorrichtungsoberfläche 27 in einem Abstand vertikal über der Tischoberfläche 13 angeordnet sein. In der abgesenkten Stellung 29 kann die erste Hubvorrichtungsoberfläche 27 geringfügig vertikal unterhalb der Tischoberfläche 13 angeordnet sein.

Insbesondere kann vorgesehen sein, dass die erste Hubvorrichtung 26 eine erste Platte 30 umfasst. Die erste Platte 30 kann an der ersten Seite 24 des Aufgabetisches 12 vertikal stehend ausgerichtet angeordnet sein. Insbesondere kann vorgesehen sein, dass die erste Platte 30 eine erste Plattenstärke 31 aufweist. Die erste Plattenstärke 31 kann sich in Förderrichtung 10 erstrecken. Weiters kann vorgesehen sein, dass die erste Platte 30 eine erste Plattenbreite 32 aufweist. Die ersten Plattenbreite 32 kann sich in der Querrichtung 14 erstrecken. Weiters kann vorgesehen sein, dass die erste Platte 30 eine erste Plattenhöhe 33 aufweist. Die erste Plattenhöhe 33 kann sich vertikal erstrecken.

Weiters kann vorgesehen sein, dass an einer ersten Oberkante 34 der ersten Platte 30 ein erster Kantenschoner 35 aus einem Kunststoffmaterial angeordnet ist. Insbesondere kann vorgesehen sein, dass der erste Kantenschoner 35 austauschbar an der ersten Oberkante 34 der ersten Platte 30 angeordnet ist. Dazu kann vorgesehen sein, dass der ersten Kantenschoner 35 mittels erster Befestigungsschrauben 36 an der ersten Platte 30 befestigt ist. Insbesondere kann hierbei vorgesehen sein, dass an der ersten Platte 30 Gewindebohrungen ausgebildet sind, in welcher die ersten Befestigungsschrauben 36 eingeschraubt sind. Weiters kann vorgesehen sein, dass im ersten Kantenschoner 35 Senklöcher ausgebildet sind, sodass jeweils der Kopf der ersten Befestigungsschrauben 36 im ersten Kantenschoner 35 versenkt angeordnet werden kann. Beispielsweise kann vorgesehen sein, dass die ersten Befestigungsschrauben 36 in Form von Innensechskantschrauben ausgebildet sind. Die erste Hubvorrichtungsoberfläche 27 kann am ersten Kantenschoner 35, insbesondere an dessen Oberfläche angeordnet sein.

Weiters kann vorgesehen sein, dass eine erste Linearführung 37 ausgebildet ist, mittels welcher die erste Platte 30 relativ zur Tischoberfläche 13 in vertikaler Richtung verschiebbar am Aufgabetisch 12 aufgenommen ist.

Insbesondere kann vorgesehen sein, dass die erste Linearführung 37 eine erste Führungsschiene 38 und eine zweite Führungsschiene 39 umfasst. Die erste Führungsschiene 38 und die zweite Führungsschiene 39 können am Aufgabetisch 12 befestigt sein.

Weiters kann vorgesehen sein, dass die erste Linearführung 37 einen ersten Führungsschlitten 40 und einen zweiten Führungsschlitten 41 umfasst. Der erste Führungsschlitten 40 und der zweite Führungsschlitten 41 können an der ersten Platte 30 angeordnet sein. Insbesondere kann vorgesehen sein, dass der erste Führungsschlitten 40 in der ersten Führungsschiene 38 verschiebbar aufgenommen ist und dass der zweite Führungsschlitten 41 in der zweiten Führungsschiene 39 verschiebbar aufgenommen ist.

Insbesondere kann vorgesehen sein, dass an der ersten Platte 30 zwei der ersten Führungsschlitten 40 bzw. zwei der zweiten Führungsschlitten 41 angeordnet sind. Die zwei ersten Führungsschlitten 40 können vertikal übereinander angeordnet sein. Die zwei zweiten Führungsschlitten 41 können ebenfalls vertikal übereinander angeordnet sein.

Weiters kann vorgesehen sein, dass die erste Führungsschiene 38 und die zweite Führungsschiene 39 in Querrichtung 14 nebeneinander angeordnet sind. Die erste Führungsschiene 38 und die zweite Führungsschiene 39 können hierbei parallel zueinander ausgerichtet sein.

Weiters kann vorgesehen sein, dass die erste Hubvorrichtung 26 einen ersten Hubzylinder 42 und einen zweiten Hubzylinder 43 umfasst. Der erste Hubzylinder 42 und der zweite Hubzylinder 43 können in der Querrichtung 14 zueinander beabstandet nebeneinander angeordnet sein.

Weiters kann vorgesehen sein, dass der erste Hubzylinder 42 und der zweite Hubzylinder 43 als Pneumatikzylinder ausgebildet sind. Insbesondere kann vorgesehen sein, dass jeweils das Zylindergehäuse des ersten Hubzylinders 42 bzw. des zweiten Hubzylinders 43 mit dem Aufgabetisch 12 gekoppelt ist. Eine Zylinderstange des ersten Hubzylinders 42 bzw. des zweiten Hubzylinders 43 kann mit der ersten Platte 30 gekoppelt sein.

Insbesondere kann vorgesehen sein, dass mittels der Hubzylinder 42, 43 eine Verstellung der ersten Platte 30 zwischen der angehobenen Stellung 28 und der abgesenkten Stellung 29 ermöglicht wird. Dies kann mittels entsprechender Pneumatikventile erfolgen. Insbesondere kann vorgesehen sein, dass die Pneumatikventile derart als Sperrventile ausgebildet sind, dass die in der angehobenen Stellung 28 befindliche erste Platte 30 auch bei Stromausfall bzw. bei Druckabfall in den Pneumatikleitungen in der angehobenen Stellung 28 gehalten werden kann. Dadurch kann die Sicherheit der Plattensäge 1 verbessert werden.

Weiters kann vorgesehen sein, dass ein erster Sensor 44 ausgebildet ist. Der erste Sensor 44 kann dazu dienen, um zu erfassen, ob die erste Platte 30 in der abgesenkten Stellung 29 angeordnet ist. Insbesondere kann vorgesehen sein, dass der erste Sensor 44 als Hallsensor ausgebildet ist.

Wie aus Fig. 3 ersichtlich, kann vorgesehen sein, dass an der zweiten Seite 25 des Aufgabetisches 12 eine zweite Hubvorrichtung 45 angeordnet ist. Die zweite Hubvorrichtung 45 kann eine zweite Hubvorrichtungsoberfläche 46 aufweisen, welche zur Aufnahme des Werkstücks 2 dient. Die zweite Hubvorrichtungsoberfläche 46 kann relativ zur Tischoberfläche 13 zwischen einer angehobenen Stellung 28 und einer abgesenkten Stellung 29 verschiebbar sein.

In der angehobenen Stellung 28 kann die zweite Hubvorrichtungsoberfläche 46 in einem Abstand vertikal über der Tischoberfläche 13 angeordnet sein. In der abgesenkten Stellung 29 kann die zweite Hubvorrichtungsoberfläche 46 geringfügig vertikal unterhalb der Tischoberfläche 13 angeordnet sein.

Insbesondere kann vorgesehen sein, dass die zweite Hubvorrichtung 45 eine zweite Platte 47 umfasst. Die zweite Platte 47 kann an der zweiten Seite 25 des Aufgabetisches 12 vertikal stehend ausgerichtet angeordnet sein. Insbesondere kann vorgesehen sein, dass die zweite Platte 47 eine zweite Plattenstärke 48 aufweist. Die zweite Plattenstärke 48 kann sich in Förderrichtung 10 erstrecken. Weiters kann vorgesehen sein, dass die zweite Platte 47 eine zweite Plattenbreite 49 aufweist. Die zweite Plattenbreite 49 kann sich in der Querrichtung 14 erstrecken. Weiters kann vorgesehen sein, dass die zweite Platte 47 eine zweite Plattenhöhe 50 aufweist. Die zweite Plattenhöhe 50 kann sich vertikal erstrecken.

Weiters kann vorgesehen sein, dass an einer zweiten Oberkante 51 der zweiten Platte 47 ein zweiter Kantenschoner 52 aus einem Kunststoffmaterial angeordnet ist. Insbesondere kann vorgesehen sein, dass der zweite Kantenschoner 52 austauschbar an der zweiten Oberkante 51 der zweiten Platte 47 angeordnet ist. Dazu kann vorgesehen sein, dass der zweite Kantenschoner 52 mittels zweiter Befestigungsschrauben 53 an der zweiten Platte 47 befestigt ist. Insbesondere kann hierbei vorgesehen sein, dass an der zweiten Platte 47 Gewindebohrungen ausgebildet sind, in welcher die zweiten Befestigungsschrauben 53 eingeschraubt sind. Weiters kann vorgesehen sein, dass im zweite Kantenschoner 52 Senklöcher ausgebildet sind, sodass jeweils der Kopf der zweiten Befestigungsschrauben 53 im zweite Kantenschoner 52 versenkt angeordnet werden kann. Beispielsweise kann vorgesehen sein, dass die zweiten Befestigungsschrauben 53 in Form von Innensechskantschrauben ausgebildet sind. Die zweite Hubvorrichtungsoberfläche 46 kann am zweiten Kantenschoner 52, insbesondere an dessen Oberfläche angeordnet sein.

Weiters kann vorgesehen sein, dass eine zweite Linearführung 54 ausgebildet ist, mittels welcher die zweite Platte 47 relativ zur Tischoberfläche 13 in vertikaler Richtung verschiebbar am Aufgabetisch 12 aufgenommen ist.

Insbesondere kann vorgesehen sein, dass die zweite Linearführung 54 eine dritte Führungsschiene 55 und eine vierte Führungsschiene 56 umfasst. Die dritte Führungsschiene 55 und die vierte Führungsschiene 56 können am Aufgabetisch 12 befestigt sein.

Weiters kann vorgesehen sein, dass die zweite Linearführung 54 einen dritten Führungsschlitten 57 und einen vierten Führungsschlitten 58 umfasst. Der dritte Führungsschlitten 57 und der vierte Führungsschlitten 58 können an der zweiten Platte 47 angeordnet sein. Insbesondere kann vorgesehen sein, dass der dritte Führungsschlitten 57 in der dritten Führungsschiene 55 verschiebbar aufgenommen ist und dass der vierte Führungsschlitten 58 in der vierten Führungsschiene 56 verschiebbar aufgenommen ist.

Insbesondere kann vorgesehen sein, dass an der zweiten Platte 47 zwei der dritten Führungsschlitten 57 bzw. zwei der vierten Führungsschlitten 58 angeordnet sind. Die zwei dritten Führungsschlitten 57 können vertikal übereinander angeordnet sein. Die zwei vierten Führungsschlitten 58 können ebenfalls vertikal übereinander angeordnet sein.

Weiters kann vorgesehen sein, dass die dritte Führungsschiene 55 und die vierte Führungsschiene 56 in Querrichtung 14 nebeneinander angeordnet sind. Die dritte Führungsschiene 55 und die vierte Führungsschiene 56 können hierbei parallel zueinander ausgerichtet sein.

Weiters kann vorgesehen sein, dass die zweite Hubvorrichtung 45 einen dritten Hubzylinder 59 und einen vierten Hubzylinder 60 umfasst. Der dritte Hubzylinder 59 und der vierte Hubzylinder 60 können in der Querrichtung 14 zueinander beabstandet nebeneinander angeordnet sein.

Weiters kann vorgesehen sein, dass der dritte Hubzylinder 59 und der vierte Hubzylinder 60 als Pneumatikzylinder ausgebildet sind. Insbesondere kann vorgesehen sein, dass jeweils das Zylindergehäuse des dritten Hubzylinders 59 bzw. des vierten Hubzylinders 60 mit dem Aufgabetisch 12 gekoppelt ist. Eine Zylinderstange des dritten Hubzylinders 59 bzw. des vierten Hubzylinders 60 kann mit der zweiten Platte 47 gekoppelt sein.

Insbesondere kann vorgesehen sein, dass mittels der Hubzylinder 59, 60 eine Verstellung der zweiten Platte 47 zwischen der angehobenen Stellung 28 und der abgesenkten Stellung 29 ermöglicht wird. Dies kann mittels entsprechender Pneumatikventile erfolgen. Insbesondere kann vorgesehen sein, dass die Pneumatikventile derart als Sperrventile ausgebildet sind, dass die in der angehobenen Stellung 28 befindliche zweite Platte 47 auch bei Stromausfall bzw. bei Druckabfall in den Pneumatikleitungen in der angehobenen Stellung 28 gehalten werden kann. Dadurch kann die Sicherheit der Plattensäge 1 verbessert werden. Entsprechende Sperrventile können natürlich auch bei einer Hydraulik anstatt Pneumatik Anwendung finden.

Weiters kann vorgesehen sein, dass ein zweiter Sensor 61 ausgebildet ist. Der zweite Sensor 61 kann dazu dienen, um zu erfassen, ob die zweite Platte 47 in der abgesenkten Stellung 29 angeordnet ist. Insbesondere kann vorgesehen sein, dass der zweite Sensor 61 als Hallsensor ausgebildet ist.

Wie weiters aus Fig. 3 ersichtlich, kann vorgesehen sein, dass der Aufgabetisch 12 eine Auflageplatte 62 umfasst, an welcher die Tischoberfläche 13 ausgebildet ist. Insbesondere kann vorgesehen sein, dass die Auflageplatte 62 eine Vielzahl von in einem Muster angeordnete Befestigungslöcher 63 aufweist, welche die Auflageplatte 62 durchdringen. Weiters kann eine Vielzahl von Luftdüsen 64 ausgebildet sein, welche durch die Befestigungslöcher 63 hindurch jeweils mit dem Aufgabetisch 12 verschraubt sind bzw. in diesen hineingeschraubt sind.

Mittels der Luftdüsen 64 kann die Auflageplatte 62 am Aufgabetisch 12 befestigt sein. Insbesondere kann vorgesehen sein, dass die Luftdüsen 64 dazu ausgebildet sind, um bei Beaufschlagung mit Druckluft eine Art Luftkissen unter dem Werkstück 2 zu bilden und damit ein manuelles Verschieben der am Aufgabetisch 12, insbesondere der Tischoberfläche 13 aufliegenden Werkstücke 2 zu ermöglichen.

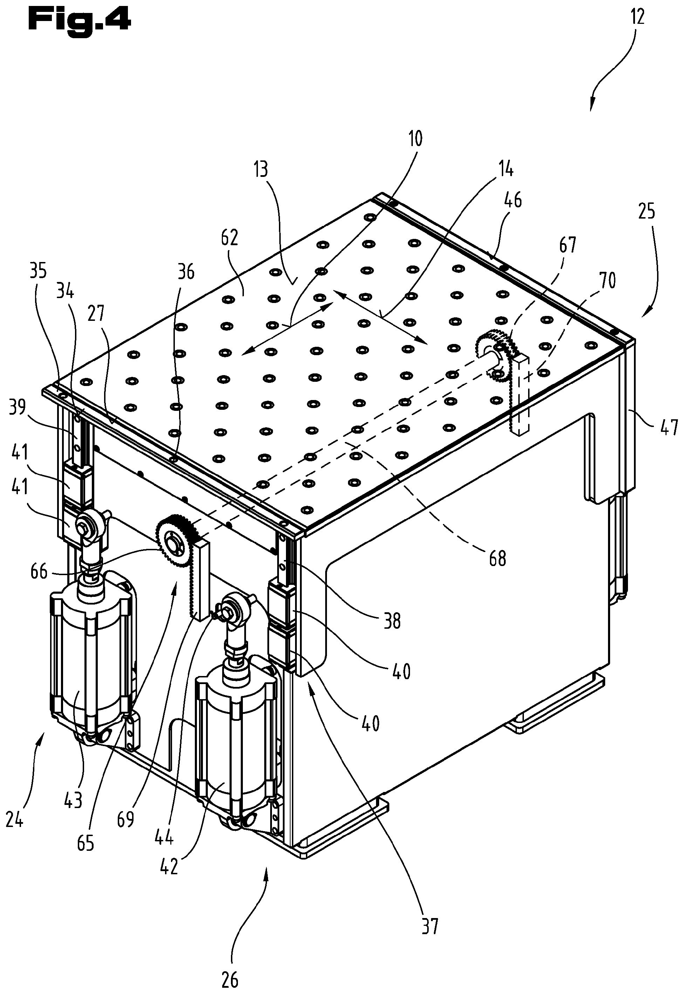

In der Fig. 4 ist eine weitere und gegebenenfalls für sich eigenständige Ausführungsform des Aufgabetisches 12 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

In der Darstellung nach Fig. 4 wurde eine perspektivische Ansicht auf die erste Seite 24 gewählt, wie sie auch in Fig. 2 gewählt wurde. In der Darstellung nach Fig. 4 befinden sich die erste Platte 30 und die zweite Platte 47 in der abgesenkten Stellung 29.

Um die zusätzlichen Bauteile der Fig. 4 beschreiben zu können, ist in der Fig. 4 die erste Platte 30 ausgeblendet.

Wie aus Fig. 4 ersichtlich, kann vorgesehen sein, dass eine Koppelvorrichtung 65 ausgebildet ist, mittels welcher die vertikale Bewegung der ersten Platte 30 und der zweiten Platte 47 miteinander gekoppelt werden kann.

Insbesondere kann vorgesehen sein, dass die Koppelvorrichtung 65 ein erstes Ritzel 66 umfasst, welches an der ersten Seite 24 des Aufgabetisches 12 angeordnet ist. Weiters kann die Koppelvorrichtung 65 ein zweites Ritzel 67 umfassen, welches an der zweiten Seite 25 des Aufgabetisches 12 angeordnet ist. Das erste Ritzel 66 und das zweite Ritzel 67 können mittels einer Verbindungswelle 68 miteinander drehmomentgekoppelt sein.

Insbesondere kann vorgesehen sein, dass das erste Ritzel 66 und das zweite Ritzel 67 an der Verbindungswelle 68 gehalten werden. Die Verbindungswelle 68 kann hierbei mittels einer nicht dargestellten ersten Lagerung und einer nicht dargestellten zweiten Lagerung drehbar im Aufgabetisch 12 aufgenommen sein.

Weiters kann vorgesehen sein, dass an der ersten Platte 30 eine erste Zahnstange 69 aufgenommen ist. Weiters kann vorgesehen sein, dass an der zweiten Platte 47 eine zweite Zahnstange 70 aufgenommen ist. Insbesondere kann vorgesehen sein, dass die erste Zahnstange 69 mit dem ersten Ritzel 66 in Eingriff steht. Weiters kann vorgesehen sein, dass die zweite Zahnstange 70 mit dem zweiten Ritzel 67 in Eingriff steht.

Mittels des ersten Ritzels 66 bzw. des zweiten Ritzels 67 bzw. der die beiden Ritzel 66, 67 verbindenden Verbindungswelle 68 kann die Bewegung der ersten Platte 30 mit der Bewegung der zweiten Platte 47 synchronisiert werden.

Bei einem derartigen Ausführungsbeispiel mit synchronisierter Platten 30, 47 ist es auch denkbar, dass der zweite Sensor 61 entfallen kann.

Durch das Ausblenden der ersten Platte 30 in der Fig. 4 ist auch die erste Führungsschiene 38 bzw. die zweite Führungsschiene 39 und auch die damit korrespondierenden ersten Führungsschlitten 40 bzw. zweiten Führungsschlitten 41 gut ersichtlich.

In weiterer Folge wird ein mögliches Verfahren zum Betrieb der Plattensäge 1 beschrieben.

Zum Start des Fertigungsvorganges kann sich die Plattensäge 1 in einer Stellung, wie sie in Fig. 1 dargestellt ist, befinden. Die erste Platte 30 bzw. die zweite Platte 47 können sich hierbei in der abgesenkten Stellung 29 befinden. Die Maschinensteuerung 18 kann derart konfiguriert sein, dass zum Anheben der ersten Platte 30 bzw. der zweiten Platte 47 von der abgesenkten Stellung 29 in die angehobene Stellung 28 folgende sicherheitsrelevante Bedingungen erfüllt sein müssen:
- der zweite Aufgabetisch 15 muss an den Aufgabetisch 12 bzw. an die Aufgabetischverlängerung 19 herangeschoben sein, sodass der Kontaktsensor 23 ein Signal abgibt;
- weiters muss mittels dem optischen Erfassungsmittel 16 erkannt werden, dass sich keine Person im Sicherheitsbereich 17 befindet;
- weiters muss mittels des Zweihand-Bedienpult 71 unter Verwendung beider Hände des Maschinenbedieners ein Befehl zum Anheben der ersten Platte 30 bzw. zweiten Platte 47 von der abgesenkten Stellung 29 in die angehobene Stellung 28 erfolgen.

Wenn die erste Platte 30 und die zweite Platte 47 nun in der angehobenen Stellung 28 positioniert sind, so kann das Werkstück 2 mittels eines Gabelstaplers auf die erste Hubvorrichtungsoberfläche 27 bzw. auf die zweite Hubvorrichtungsoberfläche 46 aufgelegt werden. Der Gabelstapler kann sich hierbei im Hinblick auf Fig. 1 von der rechten Seite kommend an den Aufgabetisch 12 annähern.

Die beiden Gabeln des Gabelstaplers können hierbei zwischen den beiden Platten 30, 47 oder auch außerhalb der Platten 30, 47 oder auch eine Gabel zwischen den Platten 30, 47 und eine Gabel außerhalb der Platten 30, 47 angeordnet sein.

Durch den Abstand der ersten Hubvorrichtungsoberfläche 27 bzw. der zweiten Hubvorrichtungsoberfläche 46 zur Tischoberfläche 13 kann hierbei unterhalb des auf die erste Hubvorrichtungsoberfläche 27 bzw. auf die zweite Hubvorrichtungsoberfläche 46 aufgelegten Werkstückes 2 ausreichend Freiraum für die Gabeln des Gabelstaplers zur Verfügung gestellt werden.

Nach dem Auflegen des Werkstückes 2 auf die erste Hubvorrichtungsoberfläche 27 bzw. die zweite Hubvorrichtungsoberfläche 46 können die Gabeln des Gabelstaplers so weit abgesenkt werden, dass sie sich nicht mehr in Kontakt mit dem Werkstück 2 befinden. Anschließend kann der Gabelstapler vom Werkstück 2 entfernt werden.

In einem anschließenden Verfahrensschritt können die erste Platte 30 und die zweite Platte 47 von der angehobenen Stellung 28 in die abgesenkte Stellung 29 bewegt werden, wodurch die Werkstücke 2 bzw. das Werkstück 2 an der Tischoberfläche 13 abgelegt werden kann. Um in der Maschinensteuerung 18 ein Verschieben der ersten Platte 30 bzw. der zweiten Platte 47 von der angehobenen Stellung 28 in die abgesenkte Stellung 29 zu ermöglichen, kann vorgesehen sein, dass die gleichen Freigabebedingungen vorliegen müssen wie sie auch in Zusammenhang mit einem Anheben der Platten 30, 47 bereits beschrieben wurden.

Dies sind insbesondere:
- der zweite Aufgabetisch 15 muss an den Aufgabetisch 12 bzw. an die Aufgabetischverlängerung 19 herangeschoben sein, sodass der Kontaktsensor 23 ein Signal abgibt;
- weiters muss mittels dem optischen Erfassungsmittel 16 erkannt werden, dass sich keine Person im Sicherheitsbereich 17 befindet;
- weiters muss mittels des Zweihand-Bedienpult 71 unter Verwendung beider Hände des Maschinenbedieners ein Befehl zum Absenken der ersten Platte 30 bzw. zweiten Platte 47 von der angehobenen Stellung 28 in die abgesenkte Stellung 29 erfolgen.

Um die Maschinensicherheit weiter zu erhöhen, kann vorgesehen sein, dass wenn sich die Platte 30, 47 in der angehobenen Stellung 28 befinden, die Positioniervorrichtung 9 nicht in Förderrichtung 10 zum Aufgabetisch 12 hin bewegt werden kann.

Wenn das Werkstück 2 auf die Tischoberfläche 13 abgesenkt ist, so können die Luftdüsen 64 aktiviert werden bzw. schon aktiviert sein, um ein manuelles Verschieben des Werkstückes 2 zu ermöglichen. Das Werkstück 2 kann anschließend in bekannter Weise in die gewünschte Form geschnitten werden.

Um das geschnittene Werkstück 2 bzw. dessen Teile wieder aus der Plattensäge 1 entfernen zu können, kann das Werkstück 2 zum Aufgabetisch 12 verschoben werden. Beim Aufgabetisch 12 angelangt, kann das Werkstück 2 nun durch Anheben der ersten Platte 30 bzw. der zweiten Platte 47 von der abgesenkten Stellung 29 in die angehobene Stellung 28 von der Tischoberfläche 13 abgehoben werden, um wieder ein Einfahren der Gabeln des Gabelstaplers zu ermöglichen. Die Sicherheitsmechanismen können hierbei, gleich wie schon beschrieben, abgefragt werden.

In einem alternativen Verfahren ist es auch denkbar, dass die Werkstücke 2 nicht am Aufgabetisch 12 aufgegeben werden, sondern an der zum Aufgabetisch 12 gegenüberliegenden Seite der Plattensäge 1 angefördert werden. Hierbei kann der Aufgabetisch 12 zum Entfernen der geschnittenen Werkstücke 2 dienen.

Beim Schneiden von besonders langen Werkstücken 2 kann vorgesehen sein, dass der zweite Aufgabetisch 15 in der Querrichtung 14 vom Aufgabetisch 12 distanziert angeordnet wird, um eine gute Auflage von Werkstücken 2 mit großer Erstreckung in der Querrichtung 14 zu ermöglichen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Plattensäge | 32 | erste Plattenbreite |
| 2 | Werkstück | 33 | erste Plattenhöhe |
| 3 | Maschinengrundgestell | 34 | erste Oberkante |
| 4 | Werkstückauflage | 35 | erster Kantenschoner |
| 5 | Sägeschlitz | 36 | erste Befestigungsschrauben |
| 6 | Kreissägeblatt | 37 | erste Linearführung |
| 7 | Sägeaggregat | 38 | erste Führungsschiene |
| 8 | Niederhaltevorrichtung | 39 | zweite Führungsschiene |
| 9 | Positioniervorrichtung | 40 | erster Führungsschlitten |
| 10 | Förderrichtung | 41 | zweiter Führungsschlitten |
| 11 | Aufgabevorrichtung | 42 | erster Hubzylinder |
| 12 | Aufgabetisch | 43 | zweiter Hubzylinder |
| 13 | Tischoberfläche | 44 | erster Sensor |
| 14 | Querrichtung | 45 | zweite Hubvorrichtung |
| 15 | zweiter Aufgabetisch | 46 | zweite Hubvorrichtungsoberfläche |
| 16 | optisches Erfassungsmittel | 47 | zweite Platte |
| 17 | Sicherheitsbereich | 48 | zweite Plattenstärke |
| 18 | Maschinensteuerung | 49 | zweite Plattenbreite |
| 19 | Aufgabetischverlängerung | 50 | zweite Plattenhöhe |
| 20 | erste Führungsanbindung | 51 | zweite Oberkante |
| 21 | zweite Führungsanbindung | 52 | zweiter Kantenschoner |
| 22 | Aufstellungsuntergrund | 53 | zweite Befestigungsschrauben |
| 23 | Kontaktsensor | 54 | zweite Linearführung |
| 24 | erste Seite | 55 | dritte Führungsschiene |
| 25 | zweite Seite | 56 | vierte Führungsschiene |
| 26 | erste Hubvorrichtung | 57 | dritter Führungsschlitten |
| 27 | erste Hubvorrichtungsoberfläche | 58 | vierter Führungsschlitten |
| 28 | angehobenen Stellung | 59 | dritter Hubzylinder |
| 29 | abgesenkte Stellung | 60 | vierter Hubzylinder |
| 30 | erste Platte | 61 | zweiter Sensor |
| 31 | erste Plattenstärke | 62 | Auflageplatte |
| 63 | Befestigungsloch | | |
| 64 | Luftdüse | | |
| 65 | Koppelvorrichtung | | |
| 66 | erstes Ritzel | | |
| 67 | zweites Ritzel | | |
| 68 | Verbindungswelle | | |
| 69 | erste Zahnstange | | |
| 70 | zweite Zahnstange | | |
| 71 | Zweihand-Bedienpult | | |

## Patentansprüche

1. Plattensäge (1) zum Trennen von Werkstücken (2) in mehrere Abschnitte, umfassend:
- ein Maschinengrundgestell (3);
- eine Werkstückauflage (4) mit einem Sägeschlitz (5);
- ein Sägeaggregat (7) welches unterhalb der Werkstückauflage (4) angeordnet ist, wobei am Sägeaggregat (7) ein Kreissägeblatt (6) angeordnet ist, welches in einer Sägestellung durch den Sägeschlitz (5) hindurchragt;
- eine Aufgabevorrichtung (11) zum Zuführen oder Abnehmen der Werkstücke (2), wobei die Aufgabevorrichtung (11) einen Aufgabetisch (12) mit einer Tischoberfläche (13) zur Auflage der Werkstücke (2) umfasst;
- eine Positioniervorrichtung (9) zum Positionieren der Werkstücke (2);
- eine Maschinensteuerung (18) zur Steuerung der Plattensäge (1),
**dadurch gekennzeichnet, dass**
die Aufgabevorrichtung (11) eine erste Hubvorrichtung (26) mit einer ersten Hubvorrichtungsoberfläche (27) umfasst, welche an einer ersten Seite (24) des Aufgabetisches (12) angeordnet ist und eine zweite Hubvorrichtung (45) mit einer zweiten Hubvorrichtungsoberfläche (46) umfasst, welche an einer zweiten Seite (25) des Aufgabetisches (12) angeordnet ist, wobei die erste Hubvorrichtungsoberfläche (27) und die zweite Hubvorrichtungsoberfläche (46) relativ zur Tischoberfläche (13) in vertikaler Richtung verschiebbar ist.

2. Plattensäge (1) nach Anspruch 1, **dadurch gekennzeichnet, dass** die erste Hubvorrichtung (26) eine stehend angeordnete erste Platte (30) umfasst, wobei die erste Platte (30) eine erste Plattenstärke (31) in einer Förderrichtung (10) aufweist und eine erste Plattenbreite (32) in einer Querrichtung (14) bezüglich der Förderrichtung (10) aufweist und die zweite Hubvorrichtung (45) eine stehend angeordnete zweite Platte (47) umfasst, wobei die zweite Platte (47) eine zweite Plattenstärke (48) in Förderrichtung (10) aufweist und eine zweite Plattenbreite (49) in der Querrichtung (14) aufweist, wobei die erste Platte (30) und die zweite Platte (47) parallel zueinander ausgerichtet sind.

3. Plattensäge (1) nach Anspruch 2, **dadurch gekennzeichnet, dass** an einer ersten Oberkante (34) der ersten Platte (30) ein erster Kantenschoner (35) aus einem Kunststoffmaterial angeordnet ist und dass an einer zweiten Oberkante (51) der zweite Platte (47) ein zweiter Kantenschoner (52) aus einem Kunststoffmaterial angeordnet ist.

4. Plattensäge (1) nach Anspruch 2 oder 3, **dadurch gekennzeichnet, dass** die erste Platte (30) mittels einer ersten Linearführung (37) mit dem Aufgabetisch (12) gekoppelt ist und die zweite Platte (47) mittels einer zweiten Linearführung (54) mit dem Aufgabetisch (12) gekoppelt ist.

5. Plattensäge (1) nach einem der Ansprüche 2 bis 4, **dadurch gekennzeichnet, dass** die erste Platte (30) mit einem ersten Hubzylinder (42) und einem zweiten Hubzylinder (43) gekoppelt ist und dass die zweite Platte (47) mit einem dritten Hubzylinder (59) und einem vierten Hubzylinder (60) gekoppelt ist, insbesondere dass die Hubzylinder (42, 43, 59, 60) als Pneumatikzylinder ausgebildet sind.

6. Plattensäge (1) nach einem der Ansprüche 2 bis 5, **dadurch gekennzeichnet, dass** die erste Platte (30) und die zweite Platte (47) mittels einer Koppelvorrichtung (65) in deren vertikaler Position miteinander gekoppelt sind.

7. Plattensäge (1) nach Anspruch 6, **dadurch gekennzeichnet, dass** die Koppelvorrichtung (65) ein erstes Ritzel (66) umfasst, welches mit einer an der ersten Platte (30) angeordneten ersten Zahnstange (69) in Eingriff steht und ein zweites Ritzel (67) umfasst, welches mit einer an der zweite Platte (47) angeordneten zweiten Zahnstange (70) in Eingriff steht, wobei das erste Ritzel (66) und das zweite Ritzel (67) mittels einer Verbindungswelle (68) miteinander gekoppelt sind.

8. Plattensäge (1) nach einem der vorhergehenden Ansprüche, **dadurch gekennzeichnet, dass** die Tischoberfläche (13) an einer wechselbaren Auflageplatte (62) aus einem gehärteten Stahlblech angeordnet ist.

9. Plattensäge (1) nach einem der vorhergehenden Ansprüche, **dadurch gekennzeichnet, dass** die Aufgabevorrichtung (11) einen zweiten Aufgabetisch (15) umfasst, welcher relativ zum Aufgabetisch (12) in einer Querrichtung (14) verschiebbar ist.

10. Verfahren zum Betreiben einer Plattensäge (1) zum Trennen von Werkstücken (2) in mehrere Abschnitte, insbesondere einer Plattensäge (1) nach einem der vorhergehenden Ansprüche, das Verfahren umfassend die Verfahrensschritte:
- Aufnahme von Werkstücken (2) auf der ersten Hubvorrichtungsoberfläche (27) und der zweiten Hubvorrichtungsoberfläche (46), wobei sich die erste Hubvorrichtung (26) und die zweite Hubvorrichtung (45) in einer angehobenen Stellung (28) befinden, in welcher ein Niveau der ersten Hubvorrichtungsoberfläche (27) und der zweiten Hubvorrichtungsoberfläche (46) oberhalb eines Niveau der Tischoberfläche (13) liegt;
- Absenken der ersten Hubvorrichtungsoberfläche (27) und der zweiten Hubvorrichtungsoberfläche (46) in eine abgesenkte Stellung (29) in der ein Niveau der ersten Hubvorrichtungsoberfläche (27) und der zweiten Hubvorrichtungsoberfläche (46) unterhalb eines Niveau der Tischoberfläche (13) liegt;
- Verschieben des auf der Tischoberfläche (13) aufliegenden Werkstückes (2) in Förderrichtung (10) zum Sägeaggregat (7).

11. Verfahren zum Betreiben einer Plattensäge (1) zum Trennen von Werkstücken (2) in mehrere Abschnitte, insbesondere einer Plattensäge (1) nach einem der vorhergehenden Ansprüche, das Verfahren umfassend die Verfahrensschritte:
- Verschieben des auf der Tischoberfläche (13) aufliegenden Werkstückes (2) in Förderrichtung (10) vom Sägeaggregat (7) zur ersten Hubvorrichtung (26) und zweiten Hubvorrichtung (45);
- Positionieren des Werkstückes (2) über der ersten Hubvorrichtungsoberfläche (27) und der zweiten Hubvorrichtungsoberfläche (46), wobei sich die erste Hubvorrichtung (26) und die zweite Hubvorrichtung (45) in einer abgesenkten Stellung (29) befinden, in welcher ein Niveau der ersten Hubvorrichtungsoberfläche (27) und der zweiten Hubvorrichtungsoberfläche (46) unterhalb eines Niveau der Tischoberfläche (13) liegt;
- Anheben der ersten Hubvorrichtungsoberfläche (27) und der zweiten Hubvorrichtungsoberfläche (46) in eine angehobene Stellung (28) in der ein Niveau der ersten Hubvorrichtungsoberfläche (27) und der zweiten Hubvorrichtungsoberfläche (46) oberhalb eines Niveau der Tischoberfläche (13) liegt
- Abnehmen des Werkstückes (2) von der ersten Hubvorrichtungsoberfläche (27) und der zweiten Hubvorrichtungsoberfläche (46) mittels einer Transportvorrichtung.

12. Verfahren nach Anspruch 10 oder 11, **dadurch gekennzeichnet, dass** die Maschinensteuerung (18) so programmiert ist, dass die Positioniervorrichtung (9) nicht in Förderrichtung (10) zur Aufgabevorrichtung (11) verschoben werden kann, wenn sich die erste Hubvorrichtung (26) und die zweite Hubvorrichtung (45) in einer angehobenen Stellung (28) befinden.

13. Verfahren nach Anspruch 12, **dadurch gekennzeichnet, dass** die erste Hubvorrichtung (26) einen ersten Sensor (44) umfasst, wobei der erste Sensor (44) erfasst, ob ein Niveau der ersten Hubvorrichtungsoberfläche (27) unterhalb eines Niveau der Tischoberfläche (13) liegt und die Freigabe einer Verschiebung der Positioniervorrichtung (9) in Förderrichtung (10) zur Aufgabevorrichtung (11) nur bei entsprechender Erfassung des ersten Sensors (44) vorliegt.

14. Verfahren nach einem der Ansprüche 10 bis 13, **dadurch gekennzeichnet, dass** die Aufgabevorrichtung (11) einen zweiten Aufgabetisch (15) umfasst, welcher relativ zum Aufgabetisch (12) in einer Querrichtung (14) verschiebbar ist, wobei ein Kontaktsensor (23) ausgebildet ist, mittels welchem ein Anliegen des zweiten Aufgabetisches (15) am Aufgabetisch (12) oder an einer Aufgabetischverlängerung (19) detektiert werden kann, wobei eine Freigabe einer Verschiebung der ersten Hubvorrichtungsoberfläche (27) von einer abgesenkten Stellung (29) in eine angehobene Stellung (28) nur bei entsprechender Erfassung des Kontaktsensors (23) vorliegt.

15. Verfahren nach einem der Ansprüche 10 bis 14, **dadurch gekennzeichnet, dass** die erste Hubvorrichtung (26) eine erste Platte (30) umfasst, welche mit einem ersten Hubzylinder (42) und einem zweiten Hubzylinder (43) gekoppelt ist und dass die zweite Hubvorrichtung (45) eine zweite Platte (47) umfasst, welche mit einem dritten Hubzylinder (59) und einem vierten Hubzylinder (60) gekoppelt ist, wobei eine Verfahrgeschwindigkeit der Hubzylinder (42, 43, 59, 60) mittels einer Drossel eingestellt wird.

16. Verfahren nach einem der Ansprüche 10 bis 15, **dadurch gekennzeichnet, dass** ein Sicherheitsbereich (17) definiert ist, wobei mittels eines optischen Erfassungsmittels (16) erfasst wird, ob sich jemand im Sicherheitsbereich (17) befindet und dass
- eine Freigabe einer Verschiebung der Positioniervorrichtung (9) in Förderrichtung (10) zur Aufgabevorrichtung (11) oder
- eine Freigabe einer Verschiebung der ersten Hubvorrichtungsoberfläche (27) von einer abgesenkten Stellung (29) in eine angehobene Stellung (28)
nur dann erfolgt, wenn sich niemand im Sicherheitsbereich (17) befindet.
